# EUROPÄISCHE PATENTSCHRIFT

(11) **EP 0 343 157 B1**
(45) Veröffentlichungstag und Bekanntmachung des Hinweises auf die Patenterteilung: **27.01.1993**
(21) Anmeldenummer: 87901341.5
(22) Anmeldetag: 20.02.1987
(51) Int. Cl.: F16N 11/10, F04B 17/00

(54) **EINRICHTUNG ZUR ELEKTROCHEMISCHEN ERZEUGUNG VON GASEN ZUM TRANSPORT VON FLUIDEN MEDIEN**
ELECTROCHEMICAL GAS GENERATION SYSTEM FOR THE TRANSPORT OF FLUID MEDIA
INSTALLATION POUR LA PRODUCTION ELECTROCHIMIQUE DE GAZ POUR LE TRANSPORT DE FLUIDES

(30) Priorität: 18.12.1986 DE 3643352
(43) Veröffentlichungstag der Anmeldung: 29.11.1989
(73) Patentinhaber: GCT GAS-CELL-TEC AG, CH-3360 Herzogenbuchsee (CH)
(72) Erfinder: WINSEL, August, D-6233 Kelkheim/Taunus (DE)
(74) Vertreter: Fischer, Franz Josef
(86) Internationale Anmeldenummer: DE8700056
(87) Internationale Veröffentlichungsnummer: WO8804750

(56) Entgegenhaltungen:
- EP-A- 0 144 002
- EP-A- 0 175 145
- DE-A- 2 520 241
- DE-A- 3 316 258
- DE-A- 3 342 969
- DE-C- 1 019 361
- DE-C- 1 542 565
- DE-C- 2 139 771
- FR-A- 2 222 761
- US-A- 3 201 282
- US-A- 3 739 573
- US-A- 3 877 989

## Beschreibung

Die vorliegende Erfindung betrifft eine Einrichtung zur elektrochemischen Erzeugung von Gasen zum Transport von fluiden Medien, wie Flüssigkeiten, Schmiermittel oder dergleichen.

Es ist bekannt, katalytische oder elektrochemische Vorgänge der Gasentwicklung zum Transport von Flüssigkeiten für technische Zwecke zu benutzen. So wird z. B. durch katalytische Zersetzung von Hydrazin in Wasserstoff und Stickstoff ein arbeitsreiches Druckgas erzeugt, mit dem innerhalb kurzer Zeit die mit Wasser vollgelaufenen Tanks von Unterwasser-Fahrzeugen leergedrückt werden können. Je nach Art des Katalysators enthält das Wasserstoff-Stickstoff-Gemisch einen mehr oder weniger großen Anteil von Ammoniak. Mit steigendem Gehalt an Ammoniak wird ein heißes Spaltgas geliefert, dessen Druckenergie zum Betrieb von Steuertriebwerken in der Weltraumtechnik ausgenutzt wird. Es besteht auch die Möglichkeit, den Sauerstoff, der katalytisch aus Wasserstoffperoxid freigesetzt wird, als Druckgas zu verwenden. Als Katalysator kommt hierbei insbesondere Silber in Betracht. Auch bei der Zersetzung von Wasserstoffperoxid wird eine große Wärmemenge frei, die im allgemeinen ein besonderes Wärmemanagement erforderlich macht.

Gemeinsam ist den beiden genannten Gaserzeugungsprozessen, daß die pro Zeiteinheit freigesetzte Gasmenge durch den Diffusions- oder Konvektionsstrom der Reaktionsflüssigkeit zum Katalysator bestimmt wird, die Reaktion also nur gestoppt werden kann, wenn dieser Transportvorgang unterbrochen wird. Es ist schon vorgeschlagen worden, selbstregelnde Zersetzer für Hydrazin und Wasserstoffperoxid unter Verwendung von Katalysatorstrukturen zu bauen, wie sie in der Gasdiffusionselektrodentechnik Verwendung finden (Ventil-Elektroden, US-A-3, 201, 282; DE-C-1542 565). Bei diesen Zersetzern fungiert der Gasdruck als Steuergröße. Betreibt man sie mit einer wäßrigen, verdünnten Lösung von Hydrazin bzw. Wasserstoffperoxid, so kann die Gaserzeugungsrate z. B. konstant gehalten werden, wenn man den Fluß des Abwassers konstant hält.

Wasserstoff kann auch dadurch erzeugt werden, daß ein unedles Metall mit einer Lauge oder Säure korrodiert. Wird z. B. Zink mit Salzsäure überschüttet, so entsteht Wasserstoff und Zinkchlorid geht in Lösung. Auch in alkalischer Lösung wird bei der Zinkkorrosion Wasserstoff entwickelt. Allerdings beobachtet man an sehr sauberem Zink kaum eine Wasserstoffentwicklung, da an diesem Metall die Wasserstoffüberspannung besonders hoch ist. Die Trägheit der Zinkauflösung in alkalischem Medium wird noch durch die Ausbildung von Zinkoxid-Passivschichten unterstützt.

Der Korrosionsvorgang kann allerdings dadurch beschleunigt werden, daß das Zinkmetall mit einem anderen Metall verunreinigt wird, das eine niedrigere Wasserstoffüberspannung hat. Bekannt ist das Experiment, bei dem ein sauberes Zinkblech mit einem Platindraht berührt wird. Dann entsteht an dem Platindraht Wasserstoff, und das Zink korrodiert besonders in der Umgebung der Berührungsstelle. Es ist auch bekannt, ein Stück massives Zinkmetall zu durchbohren und mit einem Molybdänstab zu verlöten. Auch so wird ein Korrosionselement erzeugt, dessen Wasserstoffentwicklung durch die Größe der Fläche des die Wasserstoffabscheidung begünstigenden Metalles bestimmt werden kann.

Ein solches Kurzschlußelement ist jedoch sehr von den Zufälligkeiten abhängig, unter denen die die Korrosion bestimmenden Oberflächen gebildet werden, d. h. die Wasserstoffentwicklung eines solchen Kurzschlußelementes ist nicht von außen zu beeinflussen.

Die DE-A-2520241 beschreibt eine Einrichtung zur elektrochemischen Erzeugung von Gasen zum Transport von fluiden Medien durch die Anwendung einer aus Anode, Kathode und einen wässerigen Elektrolyten bestehenden galvanischen Zelle, in der durch Schließen eines äußeren Stromkreises ein Strom fließt, durch welchen eine dem Stromfluß entsprechende Menge an Gas erzeugt wird. Bei dieser bekannten Einrichtung ist die galvanische Zelle in Sandwich-Bauweise ausgebildet und weist eine Anode aus Zink oder einem anderen Metall oder einer geeigneten Legierung auf, wobei eine absorbierende Isolierschicht aus Papier oder Baumwolle im Inneren der Anode vorgesehen ist.

Eine relativ dicke Lage einer aus Kohlenstoff oder anderem geeigneten Material ist mit einem Elektrolyten vermischt. Unter der Pastenschicht ist eine Kathode in Form eines feinen Drahtnetzes aus rostfreiem Stahl, Blei oder ähnlichem Material angeordnet. Eine Folie aus Kunststoff, z. B. Polypropylen, bildet den Boden der Zelle und gestattet das Entweichen des Gases. Diese ohne ein besonderes Gehäuse od. dgl. gebildete galvanische Zelle ist in einer Kammer im Einsatz der Einrichtung angeordnet und ruht auf dem perforierten Boden der Kammer. Sie kann nicht ohne weiteres als ein separat behandelbares Element aufbewahrt und verkauft werden, weil Elektrolyt austreten oder eine unbeabsichtigte Reaktion mit der Umgebung eintreten kann.

Es ist weiterhin durch die US-A-3739573 eine Einrichtung zur Umwandlung von elektrischer Energie in mechanischer Energie bekannt, die eine elektrochemische Zelle aufweist, welche Wasserstoff erzeugt und verbraucht. Diese bekannte Zelle besteht aus zwei flachen Elektroden, die durch einen porösen Separator getrennt sind. Die eine Elektrode ist eine Platin-PTFE-Elektrode, wie sie in den üblichen Wasserstoff-Sauerstoff-Brennstoff-Zellen verwendet wird, die andere Elektrode besteht aus einer Palladium-Folie mit einer Palladium-Schwarz-Oberfläche, die mit Wasserstoff gesättigt ist. Der Separator besteht aus einer Elektrolytmatrix in Form einer Asbestscheibe, die mit einem Elektrolyten getränkt ist. Die Rückseite der Palladium-Elektrode ist mit einem gasundurchlässigen Überzug, z. B. aus Nickel oder einem undurchlässigen Kunststoff, versehen. Diese Zelle ist in einem mit Wasserstoff oder Stickstoff gefüllten Behälter angeordnet, der einen Zylinder aufweist, in dem ein Kolben verschiebbar angeordnet ist. An die Elektroden wird ein Strom einer äußeren Stromquelle angelegt. Je nachdem wie der Strom fließt, d.h. welche Elektrode mit dem positiven Pol verbunden wird, wird Wasserstoff erzeugt oder verbraucht und damit der Gasdruck im Behälter erhöht oder verringert, wodurch der Kolben nach außen oder nach innen gedrückt wird. Auch diese bekannte Zelle ist nicht unmittelbar von einem nach außen verschlossenen Gehäuse umgeben und kann somit nicht als ein separat behandelbares Element bezeichnet werden. Sie befindet sich in einem mit Wasserstoff oder Stickstoff gefüllten Behälter.

Es sind weiterhin Fettspender bekannt, bei denen das Lagerfett für den Schmiernippel mit Hilfe eines gasentwickelnden Korrosionselementes in das zu schmierende Lager gedrückt wird. Bei der Aktivierung wird das Korrosionselement mit Hilfe einer Schraube in den Elektrolytvorrat gestoßen, so daß die Gasentwicklung beginnen kann. Das entstehende Gas dehnt einen Hohlkörper aus und bewegt einen Kolben oder Trenneinsatz, der das Fett in das Lager preßt (DE-C-2139771).

Aufgabe der vorliegenden Erfindung ist es, eine Einrichtung der eingangs genannten Art zu schaffen, mit der die Gase in einer geregelten Menge und/oder zu ganz bestimmten Zeiten erzeugt werden können, die weiterhin wesentlich kompakter baut, einfacher zu fertigen ist und bei der die Gefahr von austretendem Elektrolyten vermieden wird.

Diese Aufgabe wird nach der vorliegenden Erfindung dadurch gelöst, daß die Kathode bzw. die Anode als poröse Gas-Diffusionselektrode ausgebildet ist, in deren Poren Wasserstoff bzw. Sauerstoff entsteht und daß die aktiven Komponenten der Zelle in einem Gehäuse mit einer gegenüber dem Außenraum abgrenzenden Diffusionsmembran angeordnet sind, über deren Poren der erzeugte Wasserstoff bzw. Sauerstoff in den Außenraum gelangt.

Besonders vorteilhafte Ausgestaltungen der Erfindung sind in den Unteransprüchen beschrieben.

So wurde gefunden, daß die Wasserstoffentwicklung besonders vorteilhaft in einer Zelle durchgeführt werden kann, die als negative Elektrode Zinkpulver und als positive Elektrode eine Wasserstoffabscheidungskathode in Gestalt einer Gasdiffusionselektrode besitzt. Besonders vorteilhaft ist es, wenn die Abscheidungskathode ein Metall der 8. Gruppe des Periodischen Systems der Elemente, vorzugsweise Platin, Palladium oder auch Nickel, letzteres besonders in Form eines Raney-Metalls, enthält, da diese Metalle durch eine niedrige Wasserstoffüberspannung ausgezeichnet sind. Die Elektrode wird vorzugsweise in Form einer porösen Elektrode verwendet, z. B. in Form einer Doppelskelett-Katalysatorenelektrode nach DE-C-1019 361 oder aber auch in Form einer PTFE-gebundenen Raney-Nickel-Struktur oder auch Raney-Nickel/Aktivkohle-Struktur, die in den Maschen eines Netzes oder Streckmetalls eingebettet ist. Die das Zink, den Elektrolyten, einen Separator und die Wasserstoffabscheidungskathode enthaltende Zelle ist zum Außenraum durch eine PTFE-Folie abgeschlossen, durch deren Poren das Gas austreten kann, während jedoch der Austritt des Elektrolyten durch die hohe Kapillardepression in den Poren des unbenetzbaren PTFE verhindert wird.

Es wurde gefunden, daß sich die im Handel befindlichen Zink/Luft-Zellen besonders für Hörgeräte-Anwendungen, ihren eigentlichen Zweck entfremdend, für die neue Aufgabe der Wasserstoffabgabe verwenden lassen, wenn sie über einen niedrigen Widerstand zunächst unter Verhinderung des Luftzutritts kurzgeschlossen werden, so daß es zur Wasserstoffentwicklung und zur Entstehung einer Quellströmung kommt. Diese Wasserstoffentwicklung verläuft mit der treibenden Kraft des Potentialunterschieds zwischen der reversiblen Zinkelektrode und der reversiblen Wasserstoffelektrode maximal, d.h. von etwa 0,5 Volt. Durch die Wahl eines geeigneten Schließungswiderstandes läßt sich der Korrosionsstrom vorausberechnen und ggf. eine Veränderung des Innenwiderstands der Korrosionszelle mit der Zeit dem gewünschten Wasserstoffentwicklungsstrom anpassen.

Die in derartigen Zink/Luft-Zellen verwendete Kathode ist jedoch diesem neuartigen Zweck nicht angemessen. Indem statt der PTFE-gebundenen Aktivkohle eine PTFE-gebundene Raney-Nickel-Masse oder Raney-Nickel/ Aktivkohle-Mischmasse in ein Nickelnetz eingewalzt und diese Schicht dann mit einer porösen PTFE-Folie entsprechend der Patentanmeldung DE-A-3342 969 versehen wird, kann das geschilderte Zink-Gasdiffusionselektroden-Element dem neuen Zweck optimal angepaßt werden. Grundsätzlich kann als Zinkmaterial sowohl ein massiver Zinkbecher als auch Zinkpulver oder sog. Zinkpulver-Gel benutzt werden, das zur Herstellung von Primärzellen üblicherweise in der Batterieindustrie benutzt wird. Zur Verringerung der ungewollten Wasserstoffentwicklung durch Selbstkorrosion kann das Zink in ebenfalls bekannter Weise amalgamiert sein.

Zur Ableitung wird die im Zellgefäß befindliche Zinkpulver- oder Zinkgel-Elektrode mit einem amalgamierten Metallnagel oder auch mit einem verzinkten oder cadmierten Kontaktelement entsprechend hoher Wasserstoffüberspannung kontaktiert. Dieses kann selbstverständlich auch ein aus einem entsprechenden Metall wie Zink oder Messing geformtes Gehäuseteil des Zellgefäßes sein. Dieses Gehäuseteil ist von dem zweiten metallischen Gehäuseteil, das die gasentwickelnde Elektrode in leitender Verbindung enthält, durch eine elektronisch isolierende Dichtung in bekannter Weise der Batterietechnik getrennt.

Die Zinkmenge, die in einem derartigen Gefäß unterzubringen ist, richtet sich nach der Wasserstoffemenge, die man mit der Zelle erzeugen will. Im Gegensatz dazu ist die gasentwickelnde Elektrode nur nach der Wasserstoffentwicklungsleistung zu dimensionieren. Es kann damit gerechnet werden, daß für die Wasserstoffentwicklung entsprechend einer äquivalenten Menge von 100 mA das sind 40 Ncm³/h, eine Elektrodenfläche von 1 cm² ausreichend ist.

Die Dimensionierung der Elektrolytmenge richtet sich ebenfalls nach der eingebrachten Zinkmenge. Bei der Reaktion wird Wasser verbraucht, da Zinkoxid und Wasserstoff entstehen. Die Elektrolytmenge muß also so bemessen sein, daß nach Verbrauch der für die Korrosion erforderlichen Wassermenge noch genügend Elektrolytflüssigkeit vorhanden bleibt. Bei der Zink/Luft-Zelle wird Luftsauerstoff in die Zelle aufgenommen, d.h. das Volumen des Zellinhalts vermehrt sich durch die Reaktion beträchtlich. Eine Zink/Luft-Zelle muß daher auf das Endvolumen aus der Bilanz der bei der Reaktion entstehenden und vergehenden Stoffe eingestellt werden. Das gleiche gilt auch für die Wasserstoff entwickelnde Zelle, allerdings mit dem Unterschied, daß der mit großem Volumen freigesetzte Wasserstoff innerhalb der Zelle nur wenig Volumen einnimmt. Dennoch findet durch die Reaktion eine Verminderung des Gesamtvolumens statt, zumal der entstehende Wasserstoff auch Wasserdampf mit aus dem Zellgefäß herausträgt. Man kann zur Aufrechterhaltung des Kontakts zwischen den an der Reaktion beteiligten Phasen den Elektrolyten unter Druck halten, was z.B. dadurch geschehen kann, daß man ihn unter leichtem Überdruck in das Porensystem eines grobporigen hydrophoben Körpers einbringt oder aber in den entscheidenden Bereichen den Elektrolytkontakt durch Verwendung von hydrophilen saugfänigen Papieren aufrecht erhält. Entsprechend kann auch die Zinkelektrode durch Verwendung eines Federelementes immer im Kontakt mit dem Ableiter und einem Separator gehalten werden, der hydrophil ist und sich zwischen der Zinkelektrode und der gasentwickelnden Gegenelektrode befindet.

Schließlich kann die geringe Volumenänderung der arbeitenden Zelle auch durch leichte Deformation des Zellgehäuses von außen erzwungen werden.

Ein derartiges Element kann zur Bedrückung von Kolben verwendet werden, mit deren Hilfe fluide Medien selbsttätig bewegt werden sollen. Da der Innenwiderstand derartiger Zellen nur wenige Ohm beträgt, kann die langsame Gasentwicklung durch Vorgabe des äußeren Schließungswiderstandes bestimmt und geregelt werden. Als treibende Kraft kann die offene Spannungsdifferenz zwischen der Zinkelektrode und der reversiblen Wasserstoffelektrode gelten, die in 6 n Kalilauge 0,42 V beträgt. Zur Erzeugung eines Wasserstoffstromes, der einem elektrischen Strom von 10 mA äquivalent ist, genügt es deshalb, über einen 50 Ohm Widerstand kurzzuschließen. Bei einer Wasserstoffentwicklung entsprechend einem Strom von 1 mA ist der äußere Schließungswiderstand entsprechend 500 Ohm. Bei diesem Wert spielt eine Schwankung des Innenwiderstandes der Zelle von 10 Ohm schon keine Rolle mehr.

Das gasentwickelnde Element der Erfindung ist innerhalb des entsprechend gestalteten Kolbenraumes bzw. Druckraumes angeordnet. Es wird aktiviert, indem z.B. mittels einer abgedichteten Schraube, z.B. über einen vorher gewählten Schließungswiderstand, der Kurzschluß zwischen der Zinkelektrode und der gasentwickelnden Elektrode hergestellt wird. Zweckmäßigerweise kann das Zellgefäß zum einen Teil durch Verformung des Arbeitskolbens gebildet worden sein, während die Gaselektrode mit einer Dichtung drucksicher in das Zellgefäß eingeschoben ist. Zur Inbetriebsetzung wird, der Kurzschluß zwischen der Zinkelektrode und gasentwickelnden Elektrode über einen Widerstand erzeugt, der z.B. in Form einer Widerstandsschicht ausgebildet ist und eine Zeitskala zur Einstellung der Prozeßzeit enthält, die angibt, in welcher Zeit etwa die vorhandene Fettmenge durch das Lager gedrückt wird.

Im Beispiel des geschilderten Elements wird Wasserstoff entwickelt, da der gesamte aktive Zellinhalt aus mit Wasser oxidierbarer Substanz besteht. Wird anstelle von Zink Cadmium eingesetzt, so ließe sich die Wasserstoffentwicklung nicht durch Kontakt mit einem Metall mit niedriger Wasserstoffüberspannung erzeugen. Ein solches Element kann jedoch auch zur Wasserstoffentwicklung benutzt werden, wenn mit Hilfe einer Spannungsquelle ein Strom durch das Element geschickt wird, derart, daß das Cadmium als Anode, die wasserstoffentwickelnde Elektrode jedoch als Kathode geschaltet ist, d.h. aber, in diesem Fall wird die Kathode mit dem negativen Pol, die Cadmiumelektrode mit dem positiven Pol der Spannungsquelle verbunden. Auch diese Zelle entwickelt Wasserstoff, der dem durchfließenden Strom äquivalent ist. Im Gegensatz zu dem vorher beschriebenen Zinkelement besteht hier jedoch nicht die Gefahr einer Wasserstoffentwicklung im stromlosen Zustand, da das Cadmium als edleres Metall im Vergleich zum Wasserstoff diesen nicht aus der Verbindung mit dem Sauerstoff verdrängen kann.

In manchen Fällen ist es zweckmäßig, die Entwicklung von Wasserstoff zu umgehen. Dann kann auch in der geschilderten Weise ein Sauerstoff entwickelndes Element gebaut werden, indem Sauerstoff an Elektroden der beschriebenen Art anodisch abgeschieden wird. Als Gegenelektrode kann in diesem Fall ein Metalloxid verwendet werden, z.B. Silberoxid, Quecksilberoxid, Nickeloxid, Bleidioxid oder auch Mangandioxid, wobei diese Oxide je nach ihrem elektrochemischen Verhalten zum Metall (Silber, Quecksilber, Kupfer) bzw. zu einem niederwertigeren Oxid reduziert werden (Mn₃O₄). Allerdings ist der Strombedarf zur Entwicklung einer entsprechend großen Gasmenge im Falle des Sauerstoffs doppelt so hoch wie im Falle des Wasserstoffs, da das Sauerstoffmolekül die elektrochemische Wertigkeit 4, der Wasserstoff jedoch die elektrochemische Wertigkeit 2 besitzt.

Es müssen jedoch nicht unbedingt Metalloxide sein, die als Sauerstoffspender-Elektroden auftreten. So können z.B. in einer entsprechend aufgebauten Zelle Nitrationen zu Ammoniak reduziert werden, während an der Gegenelektrode gleichzeitig Sauerstoff entwickelt wird. Sowohl für die Sauerstoffabscheidungs- als auch für die Nitratreduktions-Elektrode eignen sich die geschilderten Raney-Nickel enthaltenden Elektroden, umgekehrt kann auch Ammoniak- als Wasserstoffspender in einer elektrochemischen Zelle fungieren, da Ammoniumionen z.B. an Raney-Nickel enthaltenden Elektroden bei anodischem Stromfluß zu Nitrit- bzw. Nitrationen oxidiert werden, während an der Gegenelektrode Wasserstoff gebildet wird.

Allen den hier geschilderten Gasentwicklungszellen ist gemeinsam, daß sie im Ausgangszustand a) nur elektrochemisch oxidierbare Substanz und eine Wasserstoff-Entwicklungselektrode und wäßrigen Elektrolyten oder b) nur elektrochemisch reduzierbare Substanz und eine Sauerstoff-Entwicklungselektrode und einen wäßrigen Elektrolyten enthalten und bei von außen erzwungenem Stromdurchgang Wasserstoff oder Sauerstoff gebildet wird, der in den Poren einer Gasdiffusionselektrode entsteht und über die Poren einer hydrophoben Diffusionsmembran in den Außenraum gelangen kann, während der Elektrolyt durch die hohe Kapillardepression dieser Membran im Innenbereich des Zellgefäßes gehalten wird.

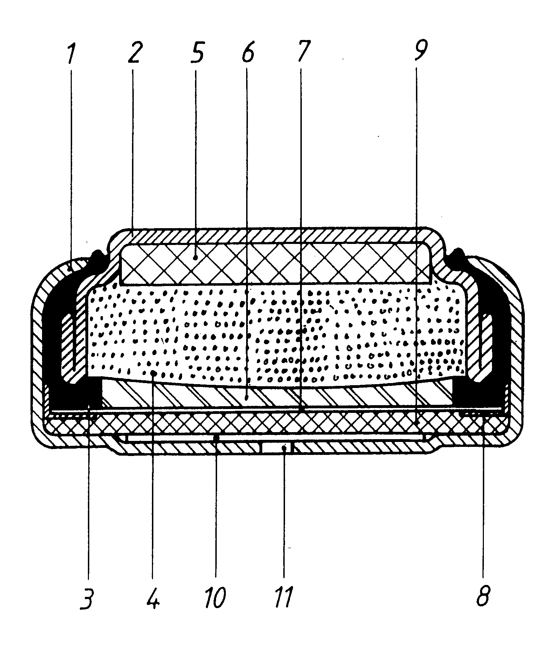

In der beiliegenden Abbildung 1 ist der Aufbau einer erfindungsgemäßen Zelle beispielhaft dargestellt. Es handelt sich hierbei um eine Knopfzelle, bestehend aus einem Becher 1 und einem Deckel 2, die zusammen mit der Kunststoffdichtung 3 das Gehäuse bilden. 4 ist die im Deckel untergebrachte und durch diesen kontaktierte aktive Masse in Form eines elektrolythaltigen Zink-Gels oder aber in Form einer porösen Braunstein-Tablette. 5 ist ein kompressionsfähiger poröser Körper, in dem eine zusätzliche Elektrolytmenge bereitgestellt werden kann.

6 ist ein elektrolytgetränktes Vlies, 7 ein Separator, z.B. in Form einer Ionenaustauscherfolie. Diese Folie wird durch den Stützring 8 in Position gehalten. 9 stellt die Gasdiffusions-Elektrode dar, die z.B. aus der PTFE-gebundenen Raney-Nickel-Pulverschicht besteht, die in ein Nickelnetz eingewalzt wurde und zur Becherbodenseite hin eine poröse PTFE-Folie besitzt. Der metallische Stützring 8 kontaktiert die Gasdiffusions-Elektrode und verbindet sie elektrisch mit dem Bechergefäß 1. 10 ist eine grobe Vlies-Schicht, die dazu dient, das aus der Gasdiffusions-Elektrode im Betrieb flächig austretende Gas zu dem Loch 11 im Becherboden hinzuleiten und dort nach außen treten zu lassen.

Da jedes Zink-Atom zwei Elektronen freisetzt, d.h. ein Wassermolekül unter Wasserstoffbildung zu reduzieren gestattet, müssen auf 65 g Zink 18 g Wasser anteilig in die Zelle eingebracht werden.

## Patentansprüche

1. Einrichtung zur elektrochemischen Erzeugung von Gasen zum Transport von fluiden Medien durch die Verwendung einer aus Anode (2), Kathode (1) und einem wässerigen Elektrolyten (4) bestehenden galvanischen Zelle, in der durch schließen eines äußeren Stromkreises, eventuell unter Zuhilfenahme einer Gleichstromquelle, ein Strom fließt, durch welchen eine dem Stromfluß entsprechende Menge an Gas erzeugt wird,
dadurch gekennzeichnet, daß die Kathode bzw. die Anode als poröse Gas-Diffusionselektrode (9) ausgebildet ist, in deren Poren Wasserstoff bzw. Sauerstoff entsteht und daß die aktiven Komponenten der Zelle in einem Gehäuse mit einer gegenüber dem Außenraum abgrenzenden Diffusionsmembran angeordnet sind, über deren Poren der erzeugte Wasserstoff bzw. Sauerstoff in den Außenraum gelangt.

2. Einrichtung zur elektrochemischen Erzeugung von Gasen zum Transport von fluiden Medien nach Anspruch 1, dadurch gekennzeichnet, daß die galvanische Zelle eine Metallanode, vorzugsweise Zinkanode, eine Wasserstoffkathode und einen alkalischen Elektrolyten enthält, wobei die Kathode aus einer PTFE-gebundenen Metall- und/oder Kohle-Pulverschicht besteht, die in ein Metallnetz als Stromableiter eingebracht ist und auf deren vorzugsweise netzabgewandten Seite eine poröse PTFE-Folie auflaminiert, z. B. aufgewalzt ist.

3. Einrichtung zur elektrochemischen Erzeugung von Gasen zum Transport von fluiden Medien nach Anspruch 2, dadurch gekennzeichnet, daß als galvanische Zelle eine handelsübliche Zink/Luft-Zelle vorgesehen ist.

4. Einrichtung zur elektrochemischen Erzeugung von Gasen zum Transport von fluiden Medien nach Anspruch 3, dadurch gekennzeichnet, daß die Zink/Luft-Zelle über einen niedrigen Widerstand zunächst unter Verhinderung des Luftzutritts kurzgeschlossen ist.

5. Einrichtung zur elektrochemischen Erzeugung von Gasen zum Transport von fluiden Medien nach einem der Ansprüche 3 oder 4, dadurch gekennzeichnet, daß die galvanische Zelle eine aus PTFE-gebundene in ein Nickelnetz eingewalzte Raney-Nickelmasse bestehende Kathode aufweist, die mit einer porösen PTFE-Folie versehen ist.

6. Einrichtung zur elektrochemischen Erzeugung von Gasen zum Transport von fluiden Medien nach einem der Ansprüche 1 bis 5, dadurch gekennzeichnet, daß der Elektrolyt unter Druck gehalten ist.

7. Einrichtung zur elektrochemischen Erzeugung von Gasen zum Transport von fluiden Medien nach Anspruch 1, dadurch gekennzeichnet, daß die galvanische Zelle eine Metalloxidkathode, vorzugsweise aus MnO₂ und Leitgraphit, eine Sauerstoffanode und einen alkalischen Elektrolyten enthält, wobei die Anode aus einer PTFE-gebundenen Pulverschicht aus einem alkalibeständigen Metall oder einer Metallegierung und/oder aus Kohlenstoff besteht, die in ein Metallnetz als Stromableiter eingebracht ist und auf deren vorzugsweise netzabgewandten Seite eine poröse PTFE-Folie auflaminiert, z. B. aufgewalzt, ist.

8. Einrichtung zur elektrochemischen Erzeugung von Gasen zum Transport von fluiden Medien nach einem der Ansprüche 1 bis 7 , dadurch gekennzeichnet, daß im Stromkreis ein regelbarer Widerstand zur Kontrolle der Geschwindigkeit der Gasentwicklung vorgesehen ist.

## Claims

1. Device for electrochemical generation of gases for the transportation of fluid mediums through the use of a galvanic cell comprised of an anode (2), a cathode (1) and an aqueous electrolyte (4) in which by closing of an external circuit, if necessary by support of a source of direct current, a current flows by means of which a quantity of gas corresponding to the current is produced, characterized in that the cathode or the anode, respectively, is formed as a porous gaseous diffusion electrode (9) in whose pores hydrogen or oxygen, respectively, arises and in that the active components of the cell are disposed in a housing with a diffusion membrane separated from the outer area through whose pores the produced hydrogen or oxygen, respectively, reaches the outer area.

2. Device for electrochemical generation of gases for the transportaton of fluid mediums as set forth in claim 1, characterized in that the galvanic cell comprises a metalic anode, preferably a zinc anode, a hydrogen evolution cathode of a PTFE-bound metal and/or charcoal powder layer, which layer is introduced in a metal net acting as current conductor and on whose side, preferably the side turned away from the net, a porous PTFE-foil is laminated, for example applied by rolling.

3. Device for electrochemical generation of gases for the transportaton of fluid mediums as set forth in claim 2, characterized in that as the galvanic cell a conventional zinc/air cell is foreseen.

4. Device for electrochemical generation of gases for the transportaton of fluid mediums as set forth in claim 3, characterized in that the zinc/air cell, by means of a low resistance, while preventing air admission for the time being, is short circuited.

5. Device for electrochemical generation of gases for the transportaton of fluid mediums as set forth in one of the claims 3 or 4, characterized in that the galvanic cell has a cathode made of a PTFE-bound Raney-nickel substance rolled into a net made of nickel which is provided with a porous foil of PTFE.

6. Device for electrochemical generation of gases for the transportaton of fluid mediums as set forth in one of the claims 1 to 5, characterized in that the electrolyte is kept under pressure.

7. Device for electrochemical generation of gases for the transportaton of fluid mediums as set forth in claim 1, characterized in that the galvanic cell contains a metal oxide cathode, preferably of MnO2 and conductive graphite, an oxygen anode and an alkaline electrolyte, the anode consisting of a PTFE-bound powder layer of an alkalai-resistant metal or of a metal alloy and/or carbon, which is introduced in a metal net acting as a current conductor and on whose side, preferably the side turned away from the net, a porous foil of PTFE is laminated, for example applied by rolling.

8. Device for electrochemical generation of gases for the transportaton of fluid mediums as set forth in one of the claims 1 to 7, characterized in that in the electrical circuit an adjustable resistance is provided for control of the speed of gas generation.

## Revendications

1. Installation pour la production électrochimique de gaz pour le transport de fluides employant une cellule galvanique se composant d'une anode (2), d'une cathode (1) et d'un électrolyte aqueux (4), dans laquelle un courant s'écoule par la fermeture d'un circuit de courant extérieur, éventuellement avec l'aide d'une source de courant continu, par lequel la quantité de gaz obtenu correspond à la valeur du courant, caractérisée en ce que la cathode, respectivement l'anode sont formées d'électrodes (9) poreuses à la diffusion de gaz, les pores produisant de l'hydrogène et de l'oxygène, et en ce que les composants actifs de la cellule sont contenus dans un boîtier comportant une membrane de diffusion faisant limite vis-à-vis de l'extérieur, par les pores de laquelle l'hydrogène, respectivement l'oxygène obtenu atteint l'extérieur.

2. Installation pour la production électrochimique de gaz pour le transport de fluides selon la revendication 1, caractérisée en ce que la cellule galvanique comprend une anode métallique, de préférence une anode de zinc, une cathode hydrogène et un électrolyte alcalin, la cathode consistant en un métal lié à du PTFE et/ou en une couche de charbon pulvérisé, qui est disposée dans un réseau métallique comme dérivateur de courant, et sur laquelle, de préférence du côté opposé au réseau, une feuille de PTFE poreuse est laminée, p.ex. étendue au rouleau.

3. Installation pour la production électrochimique de gaz pour le transport de fluides selon la revendication 2, caractérisée en ce que la cellule galvanique est une cellule zinc/air courante du commerce.

4. Installation pour la production électrochimique de gaz pour le transport de fluides selon la revendication 3, caractérisée en ce que la cellule zinc/air est d'abord court-circuitée par une faible résistance et l'entrée d'air est empêchée.

5. Installation pour la production électrochimique de gaz pour le transport de fluides selon l'une des revendications 3 ou 4, caractérisée en ce que la cellule galvanique comprend une cathode consistant en du PTFE lié dans un réseau de nickel laminé à une masse de nickel Raney, ladite cathode étant munie d'une feuille de PTFE.

6. Installation pour la product'on électrochimique de gaz pour le transport de fluides selon l'une des revendications 1 à 5, caractérisée en ce que l'électrolyte est maintenu sous pression.

7. Installation pour la production électrochimique de gaz pour le transport de fluides selon la revendication 1, caractérisée en ce que la cellule galvanique comprend une cathode d'oxyde métallique, de préférence en MnO2 et graphite conducteur, une anode oxygène et un électrolyte alcalin, l'anode consistant en une couche pulvérisée lié à du PTFE d'un métal ou d'un alliage métallique résistant aux alcalins et/ou en carbone, qui est disposée dans un réseau métallique comme dérivateur de courant, et sur laquelle, de préférence du côté opposé au réseau, une feuille de PTFE poreuse est laminée, p.ex. étendue au rouleau.

8. Installation pour la production électrochimique de gaz pour le transport de fluides selon l'une des revendications 1 à 7, caractérisée en ce qu'une résistance réglable est prévue dans le circuit de courant pour contrôler la vitesse de production de gaz.
